# EUROPÄISCHE PATENTSCHRIFT

(11) **EP 3 063 948 B1**
(45) Veröffentlichungstag und Bekanntmachung des Hinweises auf die Patenterteilung: **20.12.2017**
(21) Anmeldenummer: 14790565.7
(22) Anmeldetag: 24.10.2014
(51) Int. Cl.: H04Q 1/14

(54) **SCHILDERRAHMEN**
PLATE-HOLDER FRAME
PORTE-ÉTIQUETTE

(30) Priorität: 28.10.2013 DE 102013221820
(43) Veröffentlichungstag der Anmeldung: 07.09.2016
(73) Patentinhaber: CommScope Technologies LLC, Hickory, NC 28602 (US)
(72) Erfinder: NEUMETZLER, Heiko, 12623 Berlin (DE)
(74) Vertreter: Murgitroyd & Company
(86) Internationale Anmeldenummer: PCT/EP2014/072813
(87) Internationale Veröffentlichungsnummer: WO 2015/062980

(56) Entgegenhaltungen:
- DE-A1- 3 813 078
- DE-A1-102008 033 430

## Beschreibung

Die Erfindung betrifft einen Schilderrahmen für die Telekommunikations- und Datentechnik sowie ein Verteileranschlussmodul mit einem solchen Schilderrahmen.

Aus der DE 10 2011 108 373 A1 ist eine Anschlussleiste für die Telekommunikations- und Datentechnik bekannt, umfassend mindestens eine erste Schnittstelle zur Aufnahme einer Steckziffer und mindestens eine zweite Schnittstelle zur Aufnahme eines Schilderrahmens. Der Schilderrahmen ist dabei schwenkbar an der zweiten Schnittstelle angelenkt, wobei die Schwenkachse senkrecht zu einer Längsrichtung der Anschlussleiste steht. Nachteilig an den bekannten Schilderrahmen ist, dass diese lösbar an den Anschlussleisten angeordnet sind, sodass stets die Gefahr besteht, dass diese verloren gehen, insbesondere wenn an den Anschlussleisten rangiert werden muss. Das dokument DE 38 13 078 A1 offenbart eine Aufnahmewanne für Anschlußleisten bei Verteilereinrichtungen in der Fernmeldetechnik. Durch einfache Rastmechanismen können Anschlußeinheiten zusammengestellt werden, wobei entsprechende Schilderrahmen für die Kennzeichnung einsetzbar sind.

DE 102008033430 offenbart auch eine Verteileranschlussmodul für die Telekommunikations- und Datentechnik. Der Erfindung liegt das technische Problem zugrunde, einen Schilderrahmen zu schaffen, bei dem die Gefahr des Verlierens aufgrund von Rangierarbeiten an den Anschlussleisten reduziert wird sowie ein zugehöriges Verteileranschlussmodul mit einem solchen Schilderrahmen zur Verfügung zu stellen.

Die Lösung des technischen Problems ergibt sich durch die Gegenstände mit den Merkmalen der Ansprüche 1 und 7. Weitre vorteilhafte Ausgestaltungen der Erfindung ergeben sich aus den Unteransprüchen. Hierzu weist der Schilderrahmen für die Telekommunikations- und Datentechnik Mittel zur Aufnahme eines Beschriftungsschildes auf, wobei der Schilderrahmen Befestigungsmittel zur Aufnahme des Schilderrahmens auf ein Montagegestell für Anschlussleisten aufweist. Hierdurch ist es möglich, den Schilderrahmen direkt am Montagegestell zu befestigen, sodass eine Anordnung auf der oder den Anschlussleisten entfallen kann. Somit behindert der Schilderrahmen auch nicht Rangierarbeiten an der Anschlussleiste und muss weder bewegt oder entfernt werden.

Prinzipiell ist es möglich, dass der Schilderrahmen nur Befestigungsmittel für eine Art vom Montagegestell aufweist, beispielsweise Befestigungsmittel zur Aufnahme auf Rundstangen oder Befestigungsmittel zur Aufnahme auf Laschen einer Montagewanne. Der Schilderrahmen erste Befestigungsmittel zur Aufnahme auf Rundstangen und zweite Befestigungsmittel zur Aufnahme auf Laschen einer Montagewanne auf, sodass der Schilderrahmen vielseitig einsetzbar ist.

In einer weiteren Ausführungsform weist das Befestigungsmittel zur Aufnahme des Schilderrahmens auf eine Rundstange eine konkave Wölbung, einen Steg und eine Anbindung des Steges auf, wobei die konkave Wölbung an einer Unterseite des Schilderrahmens angeordnet ist, wobei an dem der Unterseite des Schilderrahmens entgegengesetzten Ende der konkaven Wölbung der Steg angeordnet ist, der parallel zur Unterseite des Schilderrahmens verläuft und an dessen der konkaven Wölbung entgegengesetztem Ende die Anbindung angeordnet ist, die mit der Unterseite des Schilderrahmens verbunden ist. Dabei wird beim Aufrasten des Schilderrahmens auf die Rundstangen der Steg sowohl gebogen als auch geknickt, um die Haltekräfte aufzubringen. Der Vorteil dieser Ausführungsform ist, dass ein seitliches Umfassen der Rundstangen durch die konkaven Wöllbungen ausreichend ist. Dadurch stehen die Befestigungsmittel für die Rundstangen den Befestigungsmitteln für die Montagewanne nicht im Wege.

Vorzugsweise ist dabei der Öffnungswinkel der konkaven Wölbung kleiner als 180°. In einer weiteren Ausführungsform weist das Befestigungsmittel zur Aufnahme des Schilderrahmens auf eine Montagewanne einen federnden Steg mit einem Rastmittel auf, der in eine Öffnung in der Lasche der Montagewanne einrastet.

In einer weiteren Ausführungsform ist der Schilderrahmen als einstückiges Kunststoffteil ausgebildet.

In einer weiteren Ausführungsform weist mindestens eine Seitenwand des Schilderrahmens einen Schlitz auf. Der Schlitz dient dabei dazu, den auf dem Montagegestell aufgebrachten Schilderrahmen mittels eines Werkzeugs herunterzuhebeln.

Das Verteileranschlussmodul umfasst ein Montagegestellt, mindestens eine Anschlussleiste und mindestens einen Schilderrahmen, wobei der Schilderrahmen Befestigungsmittel zur Aufnahme des Schilderrahmens auf das Montagegestell aufweist und an dem Montagegestell befestigt ist.

In einer Ausführungsform weist der Schilderrahmen gleiche geometrische Abmessungen wie die Anschlussleiste auf. Somit wirkt der Schilderrahmen wie eine zusätzliche Anschlussleiste im Verteileranschlussmodul, sodass keine weiteren Vorhaltungen an dem Montagegestell selbst oder im Umfeld des Montagegestells notwendig sind.

Das Montagegestell als Montagewanne oder als ein Paar Rundstangen ausgebildet.

Die Erfindung wird nachfolgend anhand eines bevorzugten Ausführungsbeispiels näher erläutert. Die Figuren zeigen:
- Fig. 1: eine perspektivische Darstellung eines Schilderrahmens,
- Fig. 2: eine Schnittdarstellung eines Teils des Schilderrahmens bei einer Aufnahme durch eine Montagewanne,
- Fig. 3: eine perspektivische Darstellung eines Verteileranschlussmoduls mit einer Montagewanne als Montagegestell und
- Fig. 4: eine perspektivische Darstellung eines Verteileranschlussmoduls mit einem Paar Rundstangen als Montagegestell.

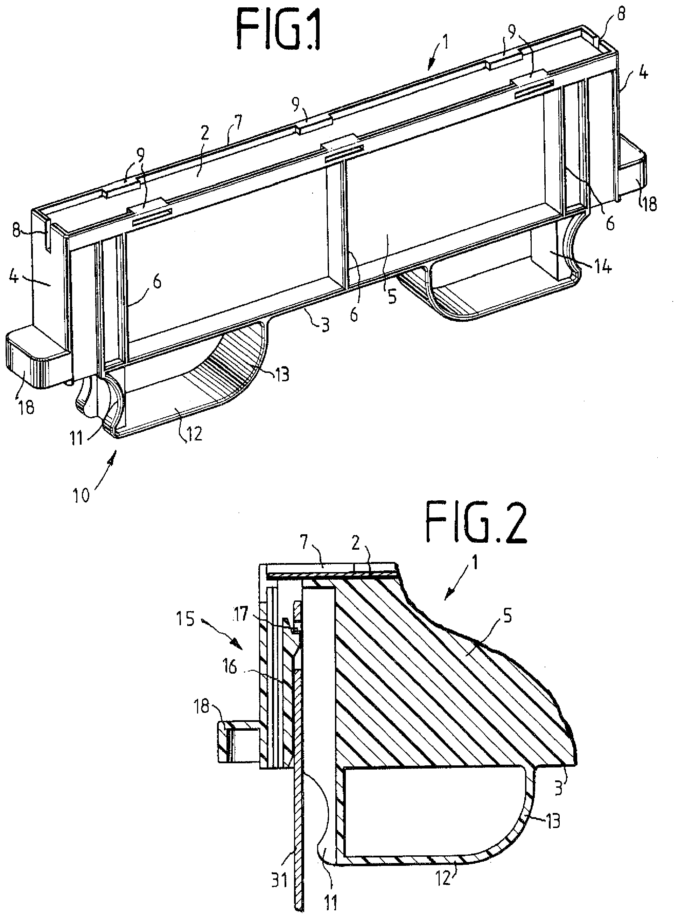

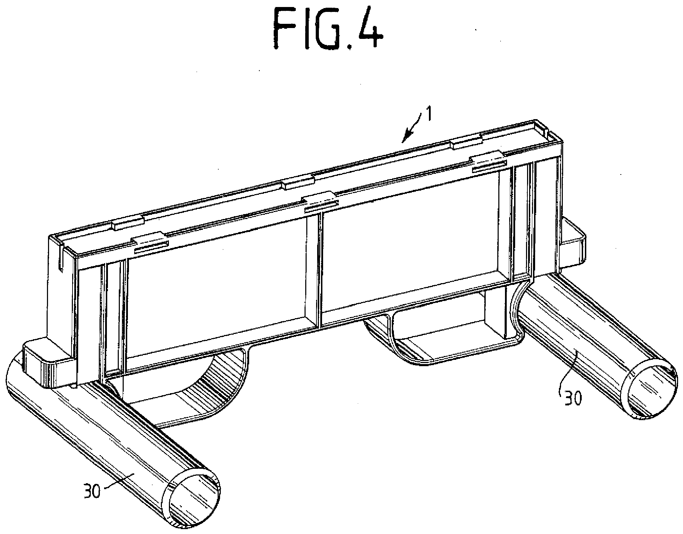

In der Fig. 1 ist ein Schilderrahmen 1 dargestellt. Der Schilderrahmen 1 weist eine Oberseite 2 und eine Unterseite 3 sowie Seitenwände 4 auf. Zwischen der Oberseite 2 und der Unterseite 3 verläuft mittig eine Wand 5. An der Wand 5 liegen zwischen Oberseite 2 und Unterseite 3 Versteifungsrippen 6. Auf der Oberseite 2 ist ein umlaufender Rand 7 angeordnet, der an den beiden Seitenwänden 4 jeweils durch einen Schlitz 8 unterbrochen ist. Von dem Rand 7 gehen insgesamt sechs Niederhalter 9 ab, die von der Oberseite 2 beabstandet sind. Unter diese Niederhalter 9 kann dann ein nicht dargestelltes Beschriftungsschild, beispielsweise ein Papierstreifen, geschoben werden, der auf der Oberseite 2 aufliegt. Des Weiteren weist der Schilderrahmen 1 zwei erste Befestigungsmittel 10 zur Aufnahme auf Rundstangen 30 auf (siehe Fig. 4). Jedes Befestigungsmittel 10 weist eine konkave Wölbung 11, einen Steg 12 und eine Anbindung 13 auf. Die konkave Wölbung 11 ist dabei kleiner als ein Halbkreis, was besonders gut in Fig. 4 erkennbar ist, weist also einen Öffnungswinkel von kleiner 180° auf. Der Öffnungswinkel ist dabei der gedachte Winkel ausgehend von einem virtuellen Kreismittelpunkt (der z.B. auf einer Mittellinie der Rundstange 30 als Kreismittelpunkt liegt) zu den offenen Enden der konkaven Wölbung 11. Hinter der konkaven Wölbung 11 liegt eine Rippe 14, die zur Verstärkung der konkaven Wölbung 11 dient. Dabei geht von dem der Unterseite 3 entgegengesetzten Ende der konkaven Wölbung 11 der Steg 12 ab und verläuft parallel zur Unterseite 3. An dem der konkaven Wölbung entgegengesetzten Ende des Steges 12 ist dann die Anbindung 13 angeordnet, die den Steg 12 mit der Unterseite 3 verbindet. Dabei weist die Anbindung 13 einen abgerundeten Übergang zum Steg 12 auf. Dabei ist der Abstand zwischen den beiden konkaven Wölbungen 11 etwas kleiner als der Abstand zwischen den Rundstangen 30. Wird dann der Schilderrahmen 1 zwischen die beiden Rundstangen 30 gedrückt, so bleibt die konkave Wölbung 11 aufgrund der Rippe 14 relativ starr, wohingegen der Steg 12 gebogen und geknickt wird, wodurch die konkaven Wölbungen 11 seitlich gegen die Rundstangen 30 gepresst werden.

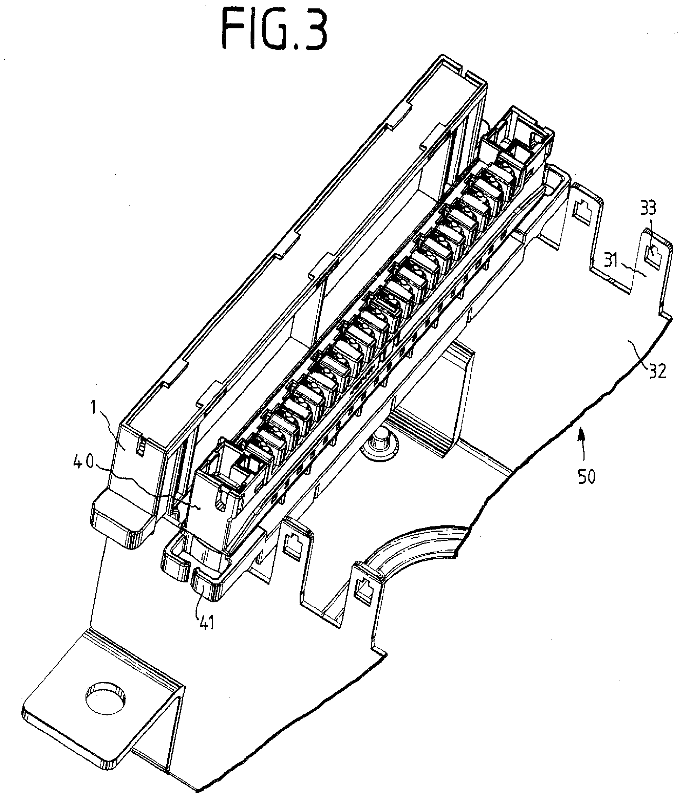

Weiter weist der Schilderrahmen 1 zwei zweite Befestigungsmittel 15 auf, mittels derer der Schilderrahmen 1 an Laschen 31 einer Montagewanne 32 befestigt werden kann (siehe z.B. Fig. 3). Die zweiten Befestigungsmittel 15 weisen jeweils einen federnden Steg 16 mit einem Rastmittel 17 in Form einer Rastnase auf. Wie in Fig. 2 dargestellt, drückt dabei die Lasche 31 der Montagewanne 32 den Steg 16 zur Seite, bis das Rastmittel 17 in eine Öffnung 33 der Lasche 31 federt und somit die Einstecktiefe begrenzt. Schließlich weist der Schilderrahmen 1 an den Seitenwänden 4 jeweils eine Kappe 18 auf, die gleiche geometrische Abmessungen wie Kabelführungen 41 einer Anschlussleiste 40 aufweisen.

Ein Verteileranschlussmodul 50 mit einem Schilderrahmen 1 ist in Fig. 3 dargestellt. Dabei ist auf die Montagewanne 32 mindestens eine Anschlussleiste 40 aufgesteckt sowie ein Schilderrahmen 1. Üblicherweise ist nicht nur eine Anschlussleiste 40, sondern eine Vielzahl von Anschlussleisten 40 auf die Montagewanne 32 aufgesteckt (z.B. 10 oder 20). Der Schilderrahmen 1 weist dabei gleiche geometrische Abmessungen wie die Anschlussleiste 40 auf, d.h. der Schilderrahmen 1 weist eine gleiche oder ähnliche Breite, Länge und Höhe auf, wobei die Detailstrukturen selbstverständlich aufgrund der unterschiedlichen Funktionen verschieden sind. Dabei sei angemerkt, dass die gleiche Höhe nicht zwingend, aber vorteilhaft ist.

### Bezugszeichenliste

- 1: Schilderrahmen
- 2: Oberseite
- 3: Unterseite
- 4: Seitenwand
- 5: Wand
- 6: Versteifungsrippe
- 7: Rand
- 8: Schlitz
- 9: Niederhalter
- 10: erstes Befestigungsmittel
- 11: konkave Wölbung
- 12: Steg
- 13: Anbindung
- 14: Rippe
- 15: zweites Befestigungsmittel
- 16: Steg
- 17: Rastmittel
- 18: Kappe
- 30: Rundstange
- 31: Lasche
- 32: Montagewanne
- 33: Öffnung
- 40: Anschlussleiste
- 41: Kabelführung
- 50: Verteileranschlussmodul

## Patentansprüche

1. Schilderrahmen (1) für die Telekommunikations- und Datentechnik, wobei der Schilderrahmen (1) Mittel zur Aufnahme eines Beschriftungsschildes aufweist,
wobei der Schilderrahmen (1) Befestigungsmittel (10, 15) zur Aufnahme des Schilderrahmens (1) auf ein Montagegestell für Anschlussleisten (40) aufweist,
**dadurch gekennzeichnet, dass** der Schilderrahmen (1) erste Befestigungsmittel (10) zur Aufnahme auf Rundstangen (30) und zweite Befestigungsmittel (15) zur Aufnahme auf Laschen (31) einer Montagewanne (32) aufweist.

2. Schilderrahmen nach Anspruch 1, **dadurch gekennzeichnet, dass** das Befestigungsmittel (10) zur Aufnahme des Schilderrahmens (1) auf eine Rundstange (30) eine konkave Wölbung (11), einen Steg (12) und eine Anbindung (13) des Steges (12) aufweist, wobei die konkave Wölbung (11) an einer Unterseite (3) des Schilderrahmens (1) angeordnet ist, wobei an dem der Unterseite (3) des Schilderrahmens (1) entgegengesetzten Ende der konkaven Wölbung (11) der Steg (12) angeordnet ist, der parallel zur Unterseite (3) des Schilderrahmens (1) verläuft und an dessen der konkaven Wölbung (11) entgegengesetzten Ende die Anbindung (13) angeordnet ist, die mit der Unterseite (3) des Schilderrahmens (1) verbunden ist.

3. Schilderrahmen nach Anspruch 2, **dadurch gekennzeichnet, dass** ein Öffnungswinkel der konkaven Wölbung (11) kleiner als 180° ist.

4. Schilderrahmen nach einem der vorangegangenen Ansprüche, **dadurch gekennzeichnet, dass** das Befestigungsmittel zur Aufnahme des Schilderrahmens auf eine Montagewanne (32) einen federnden Steg (16) mit einem Rastmittel (17) aufweist.

5. Schilderrahmen nach einem der vorangegangenen Ansprüche, **dadurch gekennzeichnet, dass** der Schilderrahmen (1) als einstückiges Kunststoffteil ausgebildet ist.

6. Schilderrahmen nach einem der vorangegangenen Ansprüche, **dadurch gekennzeichnet, dass** mindestens eine Seitenwand (4) des Schilderrahmens (1) einen Schlitz (8) aufweist.

7. Verteileranschlussmodul (50), umfassend ein Montagegestell, mindestens eine Anschlussleiste (40) und mindestens einen Schilderrahmen (1), wobei der Schilderrahmen (1) erste Befestigungsmittel (10) zur Aufnahme auf Rundstangen (30) und zweite Befestigungsmittel (15) zur Aufnahme auf Laschen einer Montagewanne aufweist, und an dem Montagegestell befestigt ist, und wobei das Montagegestell als Montagewanne (32) oder als ein Paar Rundstangen (30) ausgebildet ist.

8. Verteileranschlussmodul nach Anspruch 7, **dadurch gekennzeichnet, dass** der Schilderrahmen (1) gleiche geometrische Abmessungen wie die Anschlussleiste (40) aufweist.

## Claims

1. A label-holder frame (1) for telecommunications and data technology, wherein the label-holder frame (1) has means for receiving an inscription label,
wherein the label-holder frame (1) has attachment means (10, 15) for receiving the label-holder frame (1) on a mounting rack for connection strips (40),
**characterised in that** the label-holder frame (1) has first attachment means (10) to be received on round rods (30) and second attachment means (15) to be received on brackets (31) of a mounting tray (32).

2. The label-holder frame according to Claim 1, **characterised in that** the attachment means (10) for receiving the label-holder frame (1) on a round rod (30) has a concave curvature (11), a bar (12) and a link (13) of the bar (12), wherein the concave curvature (11) is arranged on an underside (3) of the label-holder frame (1), wherein, at the end of the concave curvature (11) opposite the underside (3) of the label-holder frame (1), there is arranged the bar (12) which runs parallel to the underside (3) of the label-holder frame (1) and at the end of which opposite the concave curvature (11) there is arranged the link (13) which is connected to the underside (3) of the label-holder frame (1).

3. The label-holder frame according to Claim 2, **characterised in that** an angle of aperture of the concave curvature (11) is less than 180°.

4. The label-holder frame according to one of the preceding claims, **characterised in that** the attachment means for receiving the label-holder frame on a mounting tray (32) has a resilient bar (16) with a catch means (17).

5. The label-holder frame according to one of the preceding claims, **characterised in that** the label-holder frame (1) is configured as a one-piece plastics part.

6. The label-holder frame according to one of the preceding claims, **characterised in that** at least one side wall (4) of the label-holder frame (1) has a slot (8).

7. A distributor connection module (50), comprising a mounting rack, at least one connection strip (40) and at least one label-holder frame (1),
wherein the label-holder frame (1) has first attachment means (10) to be received on round rods (30) and second attachment means (15) to be received on brackets of a mounting tray, and is attached to the mounting rack, and wherein the mounting rack is configured as a mounting tray (32) or as a pair of round rods (30).

8. The distributor connection module according to Claim 7, **characterised in that** the label-holder frame (1) has the same geometric dimensions as the connection strip (40).

## Revendications

1. Porte-étiquette (1) destiné aux techniques de télécommunication et de données, le porte-étiquette (1) comprenant des moyens de réception d'une étiquette,
le porte-étiquette (1) comprenant des moyens de fixation (10, 15) pour la réception du porte-étiquette (1) sur une armature de montage destinée à des réglettes de raccordement (40),
**caractérisé en ce que** le porte-étiquette (1) comprend des premiers moyens de fixation (10) pour la réception sur des barres rondes (30) et des seconds moyens de fixation (15) pour la réception sur les languettes (31) d'un boîtier de montage (32).

2. Porte-étiquette selon la revendication 1, **caractérisé en ce que**, pour la réception du porte-étiquette (1) sur une barre ronde (30), le moyen de fixation (10) comprend une partie bombée concave (11), une nervure (12) et un élément de liaison (13) de la nervure (12), sachant que la partie bombée concave (11) est disposée sur une face inférieure (3) du porte-étiquette (1), que la nervure (12) est disposée sur l'extrémité de la partie bombée concave (11) opposée à la face inférieure (3) du porte-étiquette (1), ladite nervure s'étendant parallèlement à la face inférieure (3) du porte-étiquette (1) et sur l'extrémité opposée à la partie bombée concave (11) de laquelle est disposé l'élément de liaison (13), lequel est relié à la face inférieure (3) du porte-étiquette (1).

3. Porte-étiquette selon la revendication 2, **caractérisé en ce qu'**un angle d'ouverture de la partie bombée concave (11) est inférieur à 180°.

4. Porte-étiquette selon l'une des revendications précédentes, **caractérisé en ce que**, pour la réception du porte-étiquette sur un boîtier de montage (32), le moyen de fixation comprend une nervure élastique (16) avec un moyen d'encliquetage (17).

5. Porte-étiquette selon l'une des revendications précédentes, **caractérisé en ce que** le porte-étiquette (1) se présente sous la forme d'une pièce en matière plastique monobloc.

6. Porte-étiquette selon l'une des revendications précédentes, **caractérisé en ce qu'**au moins une paroi latérale (4) du porte-étiquette (1) comprend une encoche (8).

7. Module répartiteur (50), comportant une armature de montage, au moins une réglette de raccordement (40) et au moins un porte-étiquette (1),
sachant que le porte-étiquette (1) comprend des premiers moyens de fixation (10) pour la réception sur des barres rondes (30) et des seconds moyens de fixation (15) pour la réception sur les languettes d'un boîtier de montage, et est fixé sur l'armature de montage, et que l'armature de montage se présente sous la forme d'un boîtier de montage (32) ou sous la forme d'une paire de barres rondes (30).

8. Module répartiteur selon la revendication 7, **caractérisé en ce que** le porte-étiquette (1) possède des dimensions géométriques identiques à la réglette de raccordement (40).
